# EUROPÄISCHE PATENTSCHRIFT

(11) **EP 3 739 731 B1**
(45) Veröffentlichungstag und Bekanntmachung des Hinweises auf die Patenterteilung: **21.05.2025**
(21) Anmeldenummer: 20162075.4
(22) Anmeldetag: 10.03.2020
(51) Int. Cl.: H02K 9/19, H02K 9/193, H02K 5/20

(54) **FÜHRUNGSVORRICHTUNG FÜR EIN WICKLUNGSKÖPFE EINER ELEKTRISCHEN MASCHINE UMFLIESSENDES KÜHLFLUID UND ELEKTRISCHE MASCHINE**
GUIDING DEVICE FOR A WINDING HEAD OF AN ELECTRIC MACHINE COMPRISING COOLING FLUID AND ELECTRIC MACHINE
DISPOSITIF DE GUIDAGE POUR UNE TÊTE D'ENROULEMENT D'UNE MACHINE ÉLECTRIQUE FLUIDE DE REFROIDISSEMENT À FLUX ET MACHINE ÉLECTRIQUE

(30) Priorität: 17.05.2019 DE 102019113091
(43) Veröffentlichungstag der Anmeldung: 18.11.2020
(73) Patentinhaber: Valeo eAutomotive Germany GmbH, 91056 Erlangen (DE)
(72) Erfinder: KRAIS, Nils, 97618 Strahlungen (DE); SÖNTGERATH, Philipp, 41372 Niederkrüchten (DE)

(56) Entgegenhaltungen:
- EP-A1- 2 461 463
- DE-A1- 102017 107 165
- US-A1- 2011 298 318
- US-A1- 2012 080 117

## Beschreibung

Die Erfindung betrifft eine elektrische Maschine mit einer Führungsvorrichtung für ein Wicklungsköpfe der elektrischen Maschine umfließendes Kühlfluid.

DE 10 2017 107 165 A1 offenbart eine elektrische Maschine für ein Fahrzeug, die einen Stator, Endwicklungen, die sich an einer Stirnfläche eines Kerns des Stators erstrecken, und einen die Endwicklungen umgebenden Kühltunnel für ein Kühlfluid umfasst.

EP 2 461 463 A1 offenbart eine rotierende elektrische Maschine, umfassend einen Stator, der einen Statorkern und eine Statorspule aufweist, und einen Führungsteil, der entlang zumindest eines Teils eines vom Statorkern hervorragenden Spulenendes angeordnet ist, um ein Kühlmedium entlang des Spulenendes fließen zu lassen. Über einer horizontalen Ebene, die eine rotierende Welle enthält, ist das Führungsteil innenumfangsseitig bezüglich des Spulenendes angeordnet.

Wenn elektrische Maschinen betrieben werden, erwärmen sich Statorwicklungen wegen ihres ohmschen Widerstands. Je höher ein in die elektrische Maschine eingeprägter Strom ist, desto größer sind die Verluste, welche die Erwärmung verursachen. Es ist allgemein bekannt, die Statorwicklungen mittels eines Kühlfluids zu entwärmen. Dabei wurde bereits vorgeschlagen, das Kühlfluid als Strahl auf Wicklungsköpfe zur Kühlung aufzubringen.

Das Dokument DE 10 2017 211 135 A1 offenbart eine elektrische Maschine mit einem Gehäuse, in dem ein Stator mit mehreren Wickelköpfen angeordnet ist. Das Gehäuse weist einen von einem Kühlmedium durchströmbaren Kühlkanal auf. Der Kühlkanal weist einen kreisförmigen oder kreissegmentförmigen Ringkanalabschnitt auf, über den das Kühlmedium durch mehrere Öffnungen einem Teil der Wickelköpfe durch Aufsprühen zuführbar ist. Ein unten liegender Wickelkopf wird von dem sich in einem Ölsumpf sammelnden Kühlmedium bedeckt.

Beim Besprühen der Wicklungsköpfe gelangt das Kühlfluid bei einer solchen elektrischen Maschine jedoch auf deren Welle und wird durch deren Rotation innerhalb der elektrischen Maschine verteilt. Dabei kann das Kühlfluid in einen Luftspalt zwischen einem Rotor und einem Stator der elektrischen Maschine gelangen und unerwünschte Schleppmomente verursachen.

Der Erfindung liegt mithin die Aufgabe zugrunde, eine Möglichkeit zur verbesserten Verteilung eines Kühlfluid in einer elektrischen Maschine anzugeben.

Diese Aufgabe wird erfindungsgemäß durch eine elektrische Maschine gemäß Anspruch 1 gelöst. Vorteilhafte Ausführungsformen sind Gegenstand der abhängigen Ansprüche.

Der Erfindung liegt die Überlegung zugrunde, das Kühlfluid mittels des Führungselements in Umfangsrichtung um die Welle und insbesondere auch um einen Luftspalt zwischen einem Stator und einem Rotor der elektrischen Maschine, herumzuführen, sodass eine unerwünschte Verteilung des Kühlfluids durch die rotierende Welle und ein Eindringen in den Luftspalt gehemmt oder ganz unterdrückt wird. So wird die Verteilung des Kühlfluids in der elektrischen Maschine verbessert; unerwünschte Schleppverluste beim Betrieb der elektrischen Maschine können reduziert oder ganz vermieden werden.

Typischerweise ist das Kühlfluid eine Kühlflüssigkeit, insbesondere ein Kühlöl.

Das zweite Führungselement dient dazu, das durch die Schwerkraft in Richtung eines Maschinenbodens fließende Kühlfluid nach einem Herunterfließen vom ersten Führungselement aufzunehmen und gezielt untere Wicklungsköpfe der Statorwicklungen zur Entwärmung umfließen zu lassen.

In diesem Zusammenhang wird es bevorzugt, wenn die jeweiligen Mitten in Umfangsrichtung der Führungselemente durch eine den Mittelpunkt der Ausnehmung schneidende Gerade verbindbar angeordnet sind.

Dadurch dass erfindungsgemäß im Bereich der Mitte in Umfangsrichtung des zweiten Führungselements die Auslassöffnung für das Kühlfluid ausgebildet ist, kann das Kühlfluid effektiv beim Erreichen eines tiefsten Punktes des zweiten Führungselements abgeführt werden. Bevorzugt ist dabei vorgesehen, dass das zweite Führungselement eine radiale Eintiefung aufweist, die in der im Körper ausgebildeten Auslassöffnung mündet.

Gemäß einer vorteilhaften Ausgestaltung der Führungsvorrichtung ist vorgesehen, dass am freien Ende des ersten Führungselements eine radial nach außen weisende Erhebung ausgebildet ist und/oder am freien Ende des zweiten Führungselements eine radial nach innen weisende Erhebung ausgebildet ist. Die Erhebung verleiht dem entsprechenden Führungselement eine wannenartige Struktur, was im Fall des ersten Führungselements ein Eindringen des Kühlfluids in den Luftspalt noch weiter und im Fall des zweiten Führungselements ein axiales Heraustreten des Kühlfluids aus der Führungsvorrichtung hemmt oder verhindert und insbesondere eine gezielte Führung des Kühlfluid zur Auslassöffnung hin ermöglicht.

Bevorzugt erstreckt sich das erste Führungselement über zumindest 170 Grad, bevorzugt zumindest 175 Grad und/oder höchstens 200 Grad, bevorzugt höchstens 185 Grad, besonders bevorzugt höchstens 180 Grad, in Umfangsrichtung. Ebenso kann sich das zweite Führungselement über zumindest 150 Grad, bevorzugt zumindest 170 Grad, besonders bevorzugt zumindest 175 Grad und/oder höchstens 210 Grad, bevorzugt höchstens 200 Grad, besonders bevorzugt höchstens 185 Grad, in Umfangsrichtung erstrecken.

Besonders bevorzugt ist die Führungsvorrichtung aus einem Kunststoff gebildet.

Zweckmäßigerweise ist an der anderen Stirnseite eine weitere Führungsvorrichtung angeordnet.

Um ein Eindringen des Kühlfluids in den Luftspalt effektiv zu hemmen oder zu verhindern, ist es zweckmäßig wenn die erfindungsgemäße elektrische Maschine ferner einen innerhalb des Stators unter Ausbildung eines Luftspalts angeordneten Rotor umfasst, wobei ein radial äußerster Abschnitt am freien Ende des ersten Führungselements radial weiter außen als der Luftspalt positioniert ist.

Bevorzugt ist bei der erfindungsgemäßen elektrischen Maschine ferner eine Kühlmittelzuführung vorgesehen, die derart angeordnet ist, dass das Kühlfluid auf das erste Führungselement geleitet wird, um dieses in Umfangsrichtung zu umfließen. Es wird besonders bevorzugt, wenn die Kühlmittelzuführung derart angeordnet ist, dass das Kühlfluid in radialer Richtung auf das erste Führungselement geleitet wird. Die Kühlmittelzuführung kann mehrere, insbesondere in Umfangsrichtung verteilt angeordnete, Zuführungsöffnungen aufweisen.

Erfindungsgemäß ist die Führungsvorrichtung an einem Lagerschild der elektrischen Maschine befestigt. So kann die Führungsvorrichtung einfach bei bestehenden Maschinenarchitekturen nachgerüstet werden.

Besonders bevorzugt sind die Statorwicklungen als Hairpin-Wicklungen ausgebildet.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine perspektivische Ansicht einer Führungsvorrichtung;
- Fig. 2: eine axiale Draufsicht auf die in Fig. 1 gezeigte Führungsvorrichtung;
- Fig. 3: eine perspektivische Schnittdarstellung eines Ausführungsbeispiels der erfindungsgemäßen elektrischen Maschine;
- Fig. 4: eine perspektivische Detailansicht der elektrischen Maschine im Bereich eines ersten Führungselements der Führungsvorrichtung; und
- Fig. 5: eine perspektivische Detailansicht der elektrischen Maschine im Bereich eines zweiten Führungselements der Führungsvorrichtung.

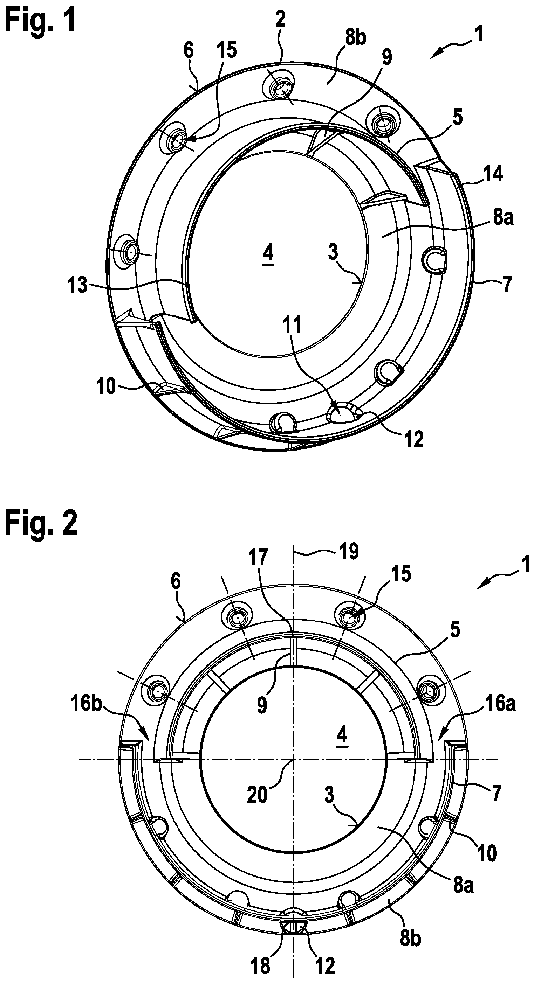

Fig. 1 ist eine perspektivische Ansicht einer Führungsvorrichtung 1.

Die Führungsvorrichtung 1 umfasst einen Körper 2 mit einer durch einen inneren Rand 3 begrenzten Ausnehmung 4 sowie ein erstes Führungselement 5, das in Axialrichtung vom Körper absteht und sich an einer zwischen dem inneren Rand 3 und einem äußeren Rand 6 des Körpers 2 liegenden ersten Radialposition in Umfangsrichtung erstreckt. Daneben umfasst die Führungsvorrichtung 1 zusätzlich ein zweites Führungselement 7, das in Axialrichtung vom Körper 2 absteht und sich an einer zwischen der ersten Radialposition und dem äußeren Rand 6 liegenden zweiten Radialposition in Umfangsrichtung erstreckt. Der gesamte Körper 2 ist aus einem elektrisch isolierenden Material, hier aus einem Kunststoff, gebildet.

Der Körper 2 weist dazu einen durch den Rand 3 begrenzten inneren Abschnitt 8a auf, der sich entlang einer Radialebene erstreckt, und einen zweiten Abschnitt 8b, der durch den äußeren Rand 6 begrenzt und gegenüber dem ersten Abschnitt 8a axial abgewinkelt ist. In einem Übergangsbereich zwischen dem ersten Abschnitt 8a und dem zweiten Abschnitt 8b ist auf einer in Fig. 1 zu sehenden ersten Seite des Körpers 2 das erste Führungselement 5 angeordnet und mittels zusätzlichen radial nach innen weisenden Verstärkungselementen 9 am ersten Abschnitt 8a befestigt. Das zweite Führungselement 7 steht axial vom zweiten Abschnitt 8b des Körpers ab und ist durch zusätzliche radial nach außen weisende Verstärkungselemente 10 verstärkt.

Im Bereich der Mitte des zweiten Führungselements ist eine Auslassöffnung 11 im Körper 2 ausgebildet. Die Auslassöffnung 11 durchsetzt dabei den zweiten Abschnitt 8b des Körpers 2. Zusätzlich ist eine radial nach außen weisende Eintiefung 12 im zweiten Führungselement 7 ausgebildet, welche in die Auslassöffnung 11 mündet.

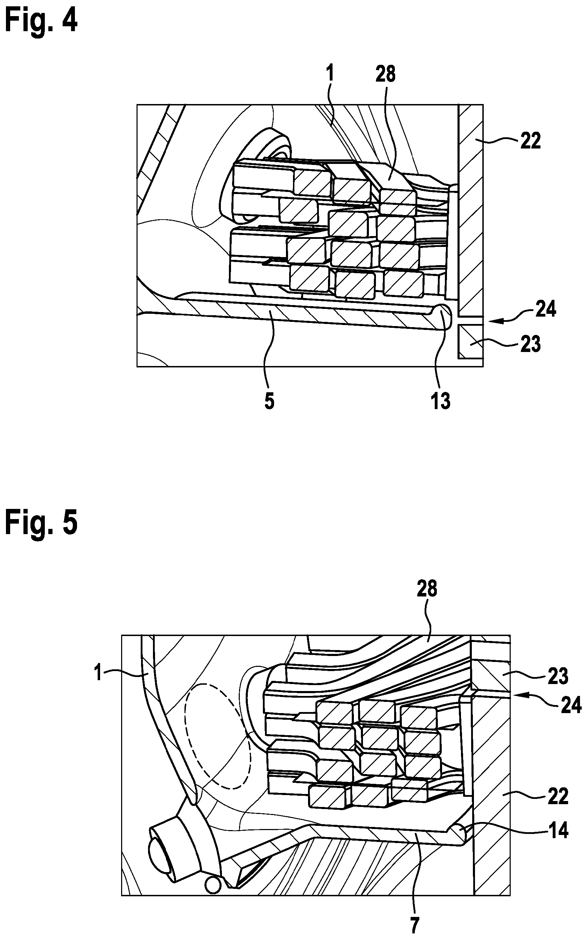

An einem freien Ende des ersten Führungselements 5 ist eine radial nach außen weisende Erhebung 13 ausgebildet, die später mit Bezug zu Fig. 4 genauer erläutert wird. An einem freien Ende des zweiten Führungselements 7 ist eine radial nach innen weisende Erhebung 14 ausgebildet, die später mit Bezug zu Fig. 5 genauer erläutert wird.

Darüber hinaus weist der Körper 2 in seinem zweiten Abschnitt 8b mehrere in Umfangsrichtung ausgebildete Durchgangsöffnungen 15 auf, die zur Befestigung der Führungsvorrichtung 1 oder zur Einleitung eines Kühlfluid auf das erste Führungselement verwendbar sind.

Fig. 2 ist eine axiale Draufsicht auf die in Fig. 1 gezeigte Seite der Führungsvorrichtung 1.

Das erste Führungselement 5 erstreckt sich in Umfangsrichtung über einen Winkelbereich von 180°. Demgegenüber erstreckt sich das zweite Führungselement 7 über ein Winkelbereich von rund 195°, sodass die Führungselemente 5, 7 zwei Überlappungsbereiche 16a, 16b ausbilden. Die jeweiligen Mitten 17, 18 der Führungselemente 5, 7 sind so angeordnet, dass eine sie verbindende Gerade 19 den Mittelpunkt 20 der Ausnehmung 4 schneidet.

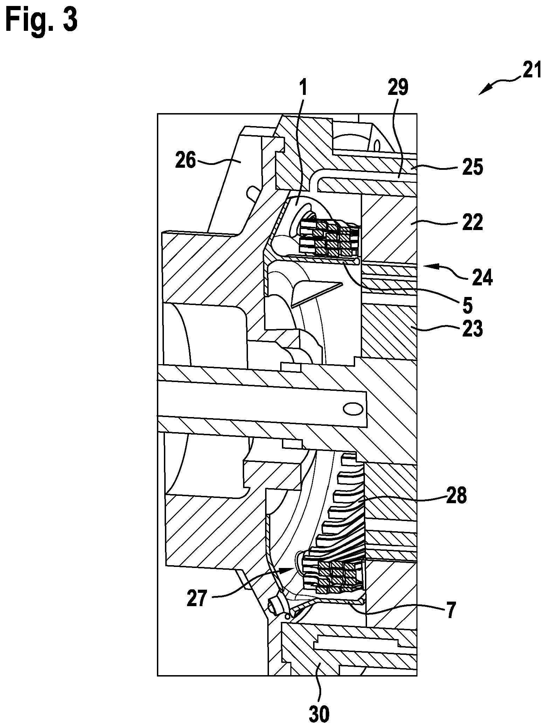

Fig. 3 ist eine perspektivische Schnittdarstellung eines Ausführungsbeispiels einer elektrischen Maschine 21 im Bereich einer ersten Stirnseite.

Die elektrische Maschine 21 umfasst einen Stator 22 und einen Rotor 23, zwischen denen ein Luftspalt 24 ausgebildet ist, ein Maschinengehäuse 25 sowie einen Lagerschild 26. In Fig. 3 ist dabei ein A-Lagerschild gezeigt. Die elektrische Maschine 21 weist an ihrer zweiten Stirnseite einen weiteren Lagerschild (B-Lagerschild) auf. An diesen Lagerschilden 26 ist jeweils eine zuvor beschriebene Führungsvorrichtung 1 angeordnet. Die elektrische Maschine 21 ist eine Antriebsmaschine für ein elektrisch antreibbares Fahrzeug.

Der Stator 22 weist Statorwicklungen 27 auf, die als Hairpin-Wicklungen ausgebildet sind. Wicklungsköpfe 28 der Statorwicklungen 27 ragen dabei aus dem Stator 22 in Richtung des Lagerschilds 26 hinaus. Das erste Führungselement 5 ist radial innerhalb der Wicklungsköpfe 28 und das zweite Führungselement 7 radial außerhalb der Wicklungsköpfe 28 angeordnet.

Die elektrische Maschine 21 weist ferner eine Kühlmittelzuführung 29 auf, die derart angeordnet ist, dass ein Kühlfluid auf das erste Führungselement 5 geleitet wird, um dieses in Umfangsrichtung zu umfließen. In den Überlappungsbereichen 16a, 16b (siehe Fig. 2) fließt das Kühlfluid infolge der in Richtung eines Maschinenbodens 30 wirkenden Schwerkraft vom ersten Führungselement 5 herab auf das zweite Führungselement 7. Dort umfließt es die übrigen Wicklungsköpfe 28 und gelangt am tiefsten Punkt des zweiten Führungselements 7 in die Auslassöffnung 11 (siehe Fig. 1).

Fig. 4 ist eine perspektivische Detailansicht der elektrischen Maschine 21 im Bereich des ersten Führungselements 5. Ersichtlich liegt ein radial äußerster Abschnitt des ersten Führungselements 5 radial weiter außen als der Luftspalt 24. Dabei verhindert die Erhebung 13, dass das Kühlfluid axial aus der Führungsvorrichtung 1 heraustritt und in den Luftspalt 24 eintritt.

Fig. 5 ist eine perspektivische Detailansicht der elektrischen Maschine 21 im Bereich des zweiten Führungselements 7. Hier verhindert die Erhebung 14, dass das Kühlfluid axial aus der Führungsvorrichtung 1 heraustritt und die Führungsvorrichtung 1 nicht durch die Auslassöffnung 11 (siehe Fig. 1) verlässt.

## Patentansprüche

1. Elektrische Maschine (21), umfassend einen Stator (22) mit Statorwicklungen (27) und eine an einer Stirnseite angeordnete Führungsvorrichtung (1) für ein Wicklungsköpfe (28) der elektrischen Maschine (21) umfließendes Kühlfluid, wobei die Führungsvorrichtung (1)
- einen Körper (2) mit einer durch einen inneren Rand (3) begrenzten Ausnehmung (4) zum Durchführen einer Welle der elektrischen Maschine (21) und
- ein erstes Führungselement (5), das in Axialrichtung vom Körper (2) absteht, sich an einer zwischen dem inneren Rand (3) und einem äußeren Rand (6) des Körpers (2) liegenden ersten Radialposition in Umfangsrichtung erstreckt und in Radialrichtung innerhalb der Wicklungsköpfe (28) der Statorwicklungen (27) angeordnet ist, umfasst,
**dadurch gekennzeichnet, dass**
die Führungsvorrichtung (1) an einem Lagerschild (26) der elektrischen Maschine (21) befestigt ist und ein zweites Führungselement (7) umfasst, das in Axialrichtung vom Körper (2) absteht, sich an einer zwischen der ersten Radialposition und dem äußeren Rand (6) des Körpers (2) liegenden zweiten Radialposition in Umfangsrichtung erstreckt und in Radialrichtung außerhalb der Wicklungsköpfe (28) angeordnet ist, wobei sich das erste Führungselement (5) über zumindest 150 Grad in Umfangsrichtung erstreckt, wobei das erste Führungselement (5) und das zweite Führungselement (7) zwei sich in Umfangsrichtung erstreckende Überlappungsbereiche (16a, 16b) ausbilden, wobei im Bereich der Mitte (18) in Umfangsrichtung des zweiten Führungselements (7) eine Auslassöffnung (11) für das Kühlfluid ausgebildet ist.

2. Elektrische Maschine nach Anspruch 1, wobei
sich das erste Führungselement (5) über höchstens 200 Grad in Umfangsrichtung erstreckt.

3. Elektrische Maschine nach Anspruch 1 oder 2, wobei die jeweiligen Mitten (17, 18) in Umfangsrichtung der Führungselemente (5, 7) durch eine den Mittelpunkt (20) der Ausnehmung (4) schneidende Gerade (19) verbindbar angeordnet sind.

4. Elektrische Maschine nach einem der vorhergehenden Ansprüche, wobei das zweite Führungselement (7) eine radiale Eintiefung (12) aufweist, die in der im Körper (2) ausgebildeten Auslassöffnung (11) mündet.

5. Elektrische Maschine nach einem der vorhergehenden Ansprüche, wobei am freien Ende des ersten Führungselements (5) eine radial nach außen weisende Erhebung (13) ausgebildet ist und/oder am freien Ende des zweiten Führungselements (7) eine radial nach innen weisende Erhebung (14) ausgebildet ist.

6. Elektrische Maschine nach einem der vorhergehenden Ansprüche, wobei die Führungsvorrichtung (1) aus einem Kunststoff gebildet ist.

7. Elektrische Maschine nach einem der vorhergehenden Ansprüche, ferner umfassend
einen innerhalb des Stators (22) unter Ausbildung eines Luftspalts (24) angeordneten Rotor (23), wobei ein radial äußerster Abschnitt am freien Ende des ersten Führungselements (5) radial weiter außen als der Luftspalt (24) positioniert ist.

8. Elektrische Maschine nach einem der vorhergehenden Ansprüche, ferner umfassend
eine Kühlmittelzuführung (29), die derart angeordnet ist, dass das Kühlfluid auf das erste Führungselement (5) geleitet wird, um dieses in Umfangsrichtung zu umfließen.

9. Elektrische Maschine nach einem der vorhergehenden Ansprüche, wobei die Statorwicklungen (27) als Hairpin-Wicklungen ausgebildet sind.

10. Elektrische Maschine nach einem der vorhergehenden Ansprüche, ferner umfassend
eine weitere Führungsvorrichtung, die an der anderen Stirnseite angeordnet ist.

## Claims

1. Electrical machine (21), comprising a stator (22) with stator windings (27) and a guide device (1) arranged on a front side for a cooling fluid flowing around winding heads (28) of the electrical machine (21), wherein the guide device (1) comprises
- a body (2), with a recess (4) delimited by an inner edge (3), for guiding through a shaft of the electrical machine (21), and
- a first guide element (5), which protrudes from the body (2) in the axial direction, extends in the peripheral direction at a first radial position lying between the inner edge (3) and an outer edge (6) of the body (2), and is arranged in the radial direction inside the winding heads (28) of the stator windings (27),
**characterized in that**
the guide device (1) is fixed to a bearing shield (26) of the electrical machine (21) and comprises a second guide element (7) which protrudes from the body (2) in the axial direction, extends in the peripheral direction at a second radial position lying between the first radial position and the outer edge (6) of the body (2), and is arranged in the radial direction outside the winding heads (28), wherein the first guide element (5) extends over at least 150 degrees in the peripheral direction, wherein the first guide element (5) and the second guide element (7) form two overlap regions (16a, 16b) extending in the peripheral direction, wherein an outlet opening (11) for the cooling fluid is formed in the region of the center (18) in the peripheral direction of the second guide element (7).

2. Electrical machine (21) according to claim 1, wherein
the first guide element (5) extends over a maximum of 200 degrees in the peripheral direction.

3. Electrical machine (21) according to claim 1 or 2, wherein
the respective centers (17, 18) in the peripheral direction of the guide elements (5, 7) are arranged so as to be connectable by a line (19) traversing the center point (20) of the recess (4).

4. Electrical machine (21) according to any one of the preceding claims, wherein
the second guide element (7) has a radial indentation (12), which opens into the outlet opening (11) formed in the body (2).

5. Electrical machine (21) according to any one of the preceding claims, wherein
a radially outwardly pointing elevation (13) is formed at the free end of the first guide element (5) and/or a radially inwardly pointing elevation (14) is formed at the free end of the second guide element (7).

6. Electrical machine (21) according to any one of the preceding claims, wherein
the guide device (1) is formed from a plastic material.

7. Electrical machine (21) according to any one of the preceding claims, further comprising a rotor (23) which is arranged inside the stator (22) forming an air gap (24), wherein an radial outermost section on the free end of the first guide element (5) is positioned radially outside the air gap (24).

8. Electrical machine (21) according to any one of the preceding claims, further comprising a coolant feed (29) which is arranged in such a way that the cooling fluid is conducted to the first guide element (5), in order to flow around the first guide element (5) in the peripheral direction.

9. Electrical machine (21) according to any one of the preceding claims, wherein the stator windings (27) are formed as hairpin windings.

10. Electrical machine (21) according to any one of the preceding claims, further comprising an additional guide device, which is arranged at the other front side.

## Revendications

1. Machine électrique (21), comprenant un stator (22) avec des enroulements de stator (27) et un dispositif de guidage (1) agencé sur un côté frontal pour un fluide de refroidissement s'écoulant autour des têtes d'enroulement (28) de la machine électrique (21), le dispositif de guidage (1) comprenant
- un corps (2) présentant un évidement (4) délimité par un bord intérieur (3) pour le passage d'un arbre de la machine électrique (21), et
- un premier élément de guidage (5) qui fait saillie du corps (2) dans la direction axiale, qui s'étend dans la direction circonférentielle à une première position radiale située entre le bord intérieur (3) et un bord extérieur (6) du corps (2), et qui est agencé dans la direction radiale à l'intérieur des têtes d'enroulement (28) des enroulements du stator (27),
**caractérisée en ce que**
le dispositif de guidage (1) est fixé à un flasque (26) de la machine électrique (21) et comprend un deuxième élément de guidage (7) qui fait saillie du corps (2) dans la direction axiale, s'étend dans la direction circonférentielle à une deuxième position radiale située entre la première position radiale et le bord extérieur (6) du corps (2) et est agencé à l'extérieur des têtes d'enroulements (28) dans la direction radiale, le premier élément de guidage (5) s'étendant sur au moins 150 degrés dans la direction circonférentielle, le premier élément de guidage (5) et le deuxième élément de guidage (7) formant deux zones de chevauchement (16a, 16b) s'étendant dans la direction circonférentielle, une ouverture de sortie (11) pour le fluide de refroidissement étant formée dans la zone du centre (18) dans la direction circonférentielle du deuxième élément de guidage (7).

2. Machine électrique selon la revendication 1, dans laquelle
le premier élément de guidage (5) s'étend sur 200 degrés au maximum dans la direction circonférentielle.

3. Machine électrique selon la revendication 1 ou la revendication 2, dans laquelle
les centres respectifs (17, 18) sont, dans la direction circonférentielle des éléments de guidage (5, 7), agencés de manière à pouvoir être reliés par une droite (19) coupant le point central (20) de l'évidement (4).

4. Machine électrique selon l'une des revendications précédentes, dans laquelle
le deuxième élément de guidage (7) présente un enfoncement radial (12) qui débouche dans l'ouverture de sortie (11) formée dans le corps (2).

5. Machine électrique selon l'une des revendications précédentes, dans laquelle
un renflement (13) orienté radialement vers l'extérieur est formé à l'extrémité libre du premier élément de guidage (5) et/ou un renflement (14) orienté radialement vers l'intérieur est formé à l'extrémité libre du deuxième élément de guidage (7).

6. Machine électrique selon l'une des revendications précédentes, dans laquelle
le dispositif de guidage (1) est formé en une matière plastique.

7. Machine électrique selon l'une des revendications précédentes, comprenant en outre
un rotor (23) placé à l'intérieur du stator (22) de manière à former un entrefer (24), dans lequel une partie radialement la plus extérieure à l'extrémité libre du premier élément de guidage (5) est positionnée radialement plus à l'extérieur que l'entrefer (24).

8. Machine électrique selon l'une des revendications précédentes, comprenant en outre
une alimentation (29) en fluide de refroidissement, agencée de manière à diriger le fluide de refroidissement sur le premier élément de guidage (5) afin qu'il circule autour de celui-ci dans la direction circonférentielle.

9. Machine électrique selon l'une des revendications précédentes, dans laquelle
les enroulements de stator (27) sont conçus sous la forme d'enroulements "hairpin" (en épingle à cheveux).

10. Machine électrique selon l'une des revendications précédentes, comprenant en outre
un autre dispositif de guidage agencé sur l'autre face frontale.
